# EUROPEAN PATENT APPLICATION

(11) **EP 4 524 957 A1**
(43) Date of publication of application: **19.03.2025**
(21) Application number: 23802774.2
(22) Date of filing: 05.05.2023
(51) Int. Cl.: G10L 13/033

(54) **AUDIO PROCESSING METHOD AND APPARATUS, AND DEVICE AND STORAGE MEDIUM**

(30) Priority: 07.05.2022 CN 202210494947
(71) Applicant: Beijing Zitiao Network Technology Co., Ltd., Beijing 100190 (CN); BEIJING BYTEDANCE NETWORK TECHNOLOGY CO., LTD., Beijing 100041 (CN)
(72) Inventor: SUN, Shangjie, Beijing 100028 (CN); LI, Peidao, Beijing 100028 (CN); LIU, Wenwu, Beijing 100028 (CN); WANG, Shengli, Beijing 100028 (CN)
(74) Representative: Dentons UK and Middle East LLP
(86) International application number: PCT/CN2023/092368
(87) International publication number: WO 2023/217002

(57) **Abstract**

The present disclosure provides an audio processing method and apparatus, a device, and a storage medium. The method includes: in response to a first instruction, displaying a first control on a first interface, where the first control is associated with audio editing; in response to an operation on the first control on the first interface, displaying one or more third controls, where the one or more third controls are configured to trigger corresponding audio editing on audio; and in response to an operation on a third control of the one or more third controls, triggering audio editing corresponding to the third control on audio to be processed, to acquire target audio.

## Description

### CROSS-REFERENCE TO RELATED APPLICATIONS

This application claims the priority to Chinese patent application No. 202210494947.7 titled "AUDIO PROCESSING METHOD AND APPARATUS, DEVICE AND STORAGE MEDIUM" and filed with the China National Intellectual Property Administration on May 07, 2022, the entire content of which is incorporated into this application by reference in its entirety.

### TECHNICAL FIELD

The present application relates to the field of information processing technology, and in particular to an audio processing method and apparatus, a device and a storage medium.

### BACKGROUND

With the continuous growth of media content and the rapid development of computer technologies, a user has a demand to interact with media (e.g., audio and/or video) and create personalized media content during the process of using media data. Common audio processing includes performing sound effect processing on audio, such as adjusting a dry-wet ratio or a reverberation, etc. However, the existing audio processing function is limited and cannot meet the diversified and personalized demand for audio production of the user.

### SUMMARY

Embodiments of the present disclosure provide an audio processing method and apparatus, a device and a storage medium, to improve audio processing efficiency and meet the personalized demand for audio production of a user.

In a first aspect, an embodiment of the present disclosure provides an audio processing method, including:
in response to a first instruction, displaying a first control on a first interface, where the first control is associated with audio editing;
in response to an operation on the first control on the first interface, displaying one or more third controls, where the one or more third controls are configured to trigger corresponding audio editing on audio; and
in response to an operation on a third control of the one or more third controls, triggering audio editing corresponding to the third control on the audio to be processed, to acquire target audio.

In a second aspect, an embodiment of the present disclosure provides an audio processing apparatus, including:
a displaying module, configured to, in response to a first instruction, display a first control on a first interface, where the second control is associated with audio effect processing, and the first control is associated with audio editing;
where the displaying module is further configured to, in response to an operation on the first control on the first interface, display one or more third controls, where the one or more third controls are configured to trigger corresponding audio editing on audio;
a processing module, configured to, in response to an operation on a third control of the one or more third controls, trigger audio editing corresponding to the third control on audio to be processed, to acquire target audio.

In a third aspect, an embodiment of the present disclosure provides an electronic device, including: a processor and a memory;
where the memory stores computer-executable instructions; and
the processor executes the computer-executable instructions stored in the memory, to cause the at least one processor to execute the audio processing method according to the above first aspect and any possible designs of the first aspect.

In a fourth aspect, an embodiment of the present disclosure provides a computer-readable storage medium where the computer-readable storage medium has computer-executable instructions stored thereon, and when a processor executes the computer-executable instructions, the audio processing method according to the above first aspect and any possible designs of the first aspect is implemented.

In the fifth aspect, an embodiment of the present disclosure provides a computer program product, including a computer program, where when the computer program is executed by a processor, the audio processing method according to the above first aspect and any possible designs of the first aspect is implemented.

In a sixth aspect, an embodiment of the present disclosure provides a computer program, where when the computer program is executed by a processor, the audio processing method according to the above first aspect and any possible designs of the first aspect is implemented.

### BRIEF DESCRIPTION OF DRAWINGS

The accompanying drawings are incorporated in and constitute a part of this specification, illustrate embodiments consistent with the present disclosure and are used to explain the principle of the present disclosure together with the description.
FIG. 1 is a schematic flowchart of an audio processing method provided by an embodiment of the present disclosure.
FIG. 2 is a schematic diagram of displaying a first interface in an embodiment of the present disclosure.
FIG. 3 is a schematic diagram of an audio processing interface in an embodiment of the present disclosure.
FIG. 4 is a schematic diagram of another audio processing interface provided by an embodiment of the present disclosure.
FIG. 5 is a schematic flowchart of another audio processing method provided by an embodiment of the present disclosure.
FIG. 6 is a schematic diagram of still another audio processing interface provided by an embodiment of the present disclosure.
FIG. 7 is a schematic diagram of yet another audio processing interface provided by an embodiment of the present disclosure.
FIG. 8 is a schematic diagram of yet another audio processing interface provided by an embodiment of the present disclosure.
FIG. 9 is a schematic diagram of yet another audio processing interface provided by an embodiment of the present disclosure.
FIG. 10 is a schematic diagram of a process of audio effect processing in the present embodiment.
FIG. 11 is a schematic diagram of principle of an electronic sound effector.
FIG. 12 is a schematic diagram of yet another audio processing interface provided by an embodiment of the present disclosure.
FIG. 13 is a schematic flowchart of yet another audio processing method according to an embodiment of the present disclosure.
FIG. 14 is a schematic diagram of an implementation principle of saving an audio file provided by an embodiment of the present disclosure.
FIG. 15 is a structural block diagram of an audio processing apparatus provided by an embodiment of the present disclosure.
FIG. 16 is a structural block diagram of an electronic device provided by an embodiment of the present disclosure.

Through the above-mentioned drawings, specific embodiments of the present disclosure have been shown and will be described in more detail hereinafter. These drawings and textual description are not intended to limit the scope of the concept of the present disclosure in any way, but to illustrate the concept of the present disclosure for those skilled in the art by referring to specific embodiments.

### DESCRIPTION OF EMBODIMENTS

In order to make the purpose, technical solutions and advantages of embodiments of the present disclosure clearer, the technical solutions in the embodiments of the present disclosure will be described as follows clearly and completely in conjunction with accompanying drawings in the embodiments of the present disclosure. Apparently, the described embodiments are a part rather than all of the embodiments of the present disclosure. Based on the embodiments in the present disclosure, all other embodiments acquired by those skilled in the art without delivering creative efforts shall fall into the protection scope of the present disclosure.

The embodiments of the present disclosure aim at the problem that the existing device cannot meet the diversified and personalized demand for audio production of a user, and propose an audio processing method. The method can present a first control associated with audio processing on an interface in response to a detected instruction, so that when an operation on the first control by the user is detected, corresponding audio effect processing or audio editing function can be executed, to obtain the target audio. The electronic device in the method provides the user with the control associated with audio processing, which can meet the diversified demand of the user and improve user experience.

The technical solution provided by the embodiments of the present disclosure can be applied to a scenario where an electronic device processes audio. The electronic device may be any device with audio processing function. The electronic device may be a terminal device, may also be a server or a virtual machine, etc., or may be a distributed computer system including one or more servers and/or computers. The terminal device includes but is not limited to a smart phone, a notebook computer, a desktop computer, a platform computer, a vehicle-mounted device, a smart wearable device, a smart screen, etc., which is not limited in the embodiments of the present disclosure. The server may be an ordinary server or a cloud server. The cloud server is also called a cloud computing server or a cloud host, which is a host product in a cloud computing service system. The server can also be a server of a distributed system, or a server combined with a blockchain.

It is worth noting that, a product implementation form of the present disclosure is program code included in platform software and deployed on an electronic device (or hardware with computing capability, such as a computing cloud or a mobile terminal). Illustratively, the program code of the present disclosure may be stored in the electronic device. During running, the program code runs in a host memory and/or GPU memory of the electronic device.

In the embodiments of the present disclosure, "multiple" refers to two or more than two. The term "and/or" describes an association relationship of associated objects, and represents that there may be three relationships. For example, A and/or B may represent three situations: presence of A only, presence of both A and B, and presence of B only. The character "/" herein generally represents an "or" relationship between contextual objects.

The technical solution of the present disclosure will be described in detail below with specific embodiments. It should be noted that, the following specific embodiments may be combined with each other, and the same or similar concepts or processes may not be repeated in some embodiments.

The embodiments of the present disclosure provide an audio processing method and apparatus, a device, and a storage medium. The method includes: in response to a first instruction, displaying a first control on a first interface, where the first control is associated with audio editing; in response to an operation on the first control on the first interface, displaying one or more third controls, where the one or more third controls are configured to trigger corresponding audio editing on audio; and in response to an operation on a third control of the one or more third controls, triggering audio editing corresponding to the third control on audio to be processed, to acquire target audio. The technical solution can meet the personalized demand for audio production and improve the user experience.

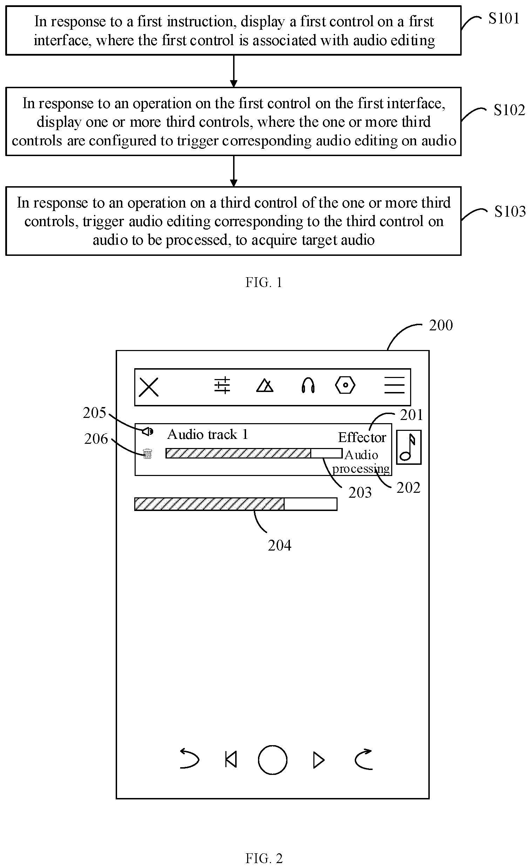

Illustratively, FIG. 1 is a schematic flowchart of an audio processing method provided by an embodiment of the present disclosure. The method is explained by using the electronic device in FIG. 1 as an execution subject. As shown in FIG. 1, the audio processing method may include the following steps:

S101, in response to a first instruction, display a first control on a first interface, where the first control is associated with audio editing.

In the embodiment of the present disclosure, when a user uses the electronic device to process audio, a first instruction can be sent to the electronic device, to make the electronic device display the first control on the first interface in response to the acquired first instruction.

It can be understood that the first instruction may be sent by the user through a human-computer interaction interface of the electronic device, for example, by touching a control on the human-computer interaction interface, or by voice (at this time, the electronic device has a control with a function of voice acquisition or playback, etc.), which will not be limited here.

Optionally, in a possible design of the present disclosure, the electronic device supports displaying the first control on the same interface, and thus, the first instruction issued by the user may trigger displaying of the first control. That is, when the electronic device acquires the first instruction, the electronic device can present the first control on the first interface in response to the first instruction.

Illustratively, FIG. 2 is a schematic diagram of displaying a first interface in an embodiment of the present disclosure. As shown in FIG. 2, a first control 202 is displayed on a first interface 200.

The first control 202 is a control associated with audio editing, for example, may be an audio processing control. Optionally, the audio editing may be editing audio (for example, an audio track 1) to optimize the audio, separating vocals and/or accompaniment from audio, mixing vocals with accompaniment, and so on.

Optionally, in a possible design of the present disclosure, the first interface may further include a second control, where the second control is associated with audio effect processing.

Illustratively, as shown in FIG. 2, a second control 201 is also displayed on the first interface 200, where the second control 201 is a control associated with audio effect processing, for example, may be a control of an effector.

Optionally, the audio effect processing can be interpreted as a process of adding various audio effects to audio (for example, the audio track 1), such as, reverberation, equalization, electronic sound, phase shifting, flanger, filter, chorus, etc. It can be understood that, types of audio effect are not limited in the embodiment, and the types of audio effect may be updated later according to actual needs, which will not be detailed here.

It can be understood that, the first interface 200 shown in FIG. 2 also includes an output channel 203 of the audio track 1 and a total output channel 204. That is, the technical solution of the embodiment can also support controlling of a volume of the output channel 203 and a volume of the total output channel 204.

Optionally, on the right side of a volume slider of the audio track 1, there is a second control 201. By touching the second control 201, an effector interface can be chosen to enter, and audio effect processing can be performed on the effector interface. For example, a desired effect presetting is selected, and an application degree of the effect can be modified. Under the effector button, audio processing can also be chosen, to unlock more audio processing methods, which will not be described in detail here.

Optionally, there is a sound control 205 and a delete control 206 on the first interface 200, where the sound control 205 is configured to trigger a mute operation on the audio track, and the delete control 206 is configured to trigger a delete operation on the audio track 1.

Optionally, the user can also control undo and redo of an operation through a playback control button at the bottom of the first interface 200, which will not be described in detail here.

S102, in response to an operation on the first control on the first interface, display one or more third controls, where the one or more third controls are configured to trigger corresponding audio editing on audio.

Illustratively, as shown in FIG. 2, when the user wants to perform audio editing on the audio track 1 on the first interface 200, an audio processing instruction can be issued through the first control 202 on the first interface 200, for example, by touching the first control 202. Correspondingly, when the electronic device detects a touch control operation on the first control 202, the electronic device would respond to it, and present one or more third controls, so that the user can realize different audio processing functions by operating the different third controls.

It can be understood that, in the embodiment, the operation on the control on the interface may be a touch control operation. The touch control operation may be interpreted as a press operation, a touch operation, or a click operation, etc., and the press operation may be a long press, a short press, or a continuous press, etc. The specific meaning of the touch control operation is not limited in the embodiment.

It can be understood that, different third controls are configured to trigger performing of different audio editing on the audio track 1, thereby realizing different audio processing functions.

Illustratively, the third control may include:
an audio optimization control, configured to trigger editing of audio to optimize the audio;
an accompaniment separating control, configured to trigger separating of vocals and/or an accompaniment from audio;
a style synthesis control, configured to trigger separating of vocals from audio, and mixing and editing of the separated vocals and a preset accompaniment;
an audio mashup control, configured to trigger separating of vocals from first audio, separating of an accompaniment from second audio, mixing and editing of the separated vocals and the separated accompaniment.

Optionally, in the embodiment, the audio optimization may also be referred to as playing and singing optimization, which is a solution for optimizing audio for vocals and/or musical instrument. For example, the audio optimization may include, but is not limited to including options such as male voice guitar, female voice guitar, male voice piano, female voice piano, and the like.

The accompaniment separation may include options to remove vocals, remove an accompaniment, or separate an accompaniment (that is, obtaining the vocals and accompaniment after the separation).

The style synthesis may also be called one-click remix, that is, the separated vocals and a preset accompaniment can be mixed and edited. Optionally, the preset accompaniment can include, but is not limited to, the following types: uplifting music in car, classic pop, crush moment, relaxing moment, childhood fun, hip-hop backstreet, future bass, reggae style, drum, etc.

The audio mashup (mashup) is a solution for mixing and editing at least two pieces of audio, which can be the mixing and editing of vocals and an accompaniment, or the mixing and editing of at least two vocal segments, or the mixing and editing of at least two accompaniments. The source audio used is not limited in the embodiment of the present disclosure.

S103, in response to an operation on a third control of the one or more third controls, trigger audio editing corresponding to the third control on the audio to be processed, to acquire target audio.

Illustratively, in an embodiment of the present disclosure, the user can issue an audio editing instruction through one or more third controls presented. For example, the user can issue an audio editing instruction by touching a third control, or a voice function is triggered after the user operates on the third control, to acquire the audio editing instruction issued by the user through voice. Correspondingly, the electronic device can execute the audio editing function corresponding to the third control in response to the touch control operation on the third control, to obtain the target audio.

Optionally, the third control may be at least one control or at least a group of controls among audio optimization control, accompaniment separation control, style synthesis control, and audio mashup control.

An embodiment of the present disclosure provides an audio processing method, including: in response to a first instruction, displaying a first control on a first interface, where the first control is associated with audio editing; in response to an operation on the first control on the first interface, displaying one or more third controls configured to trigger corresponding audio editing on audio; in response to an operation on a third control of the one or more third controls, triggering audio editing corresponding to the third control on audio to be processed, to acquire target audio. This technical solution realizes the flexible switching of various functions and visualizes the process, which meets the intelligent and personalized demands of users during the audio production and improves user experience.

In order to enable a reader to have a deeper understanding of the implementation principle of the present disclosure, further refinements will be made in conjunction with the following embodiments.

Optionally, in various embodiments of the present disclosure, the audio effect may include one or more of the following: reverberation, equalization, electronic sound, phase shifting, flanger, filter, chorus.

The audio editing includes one or more of: editing audio to optimize the audio; separating vocals and/or an accompaniment from audio; separating vocals from audio and mixing the separated vocals with a preset accompaniment; and separating vocals from first audio, separating an accompaniment from second audio, and mixing the separated vocals with the separated accompaniment.

In the embodiment, the audio effect may be an effect of a commonly described effector. The following is an explanation of an equalization effector corresponding to equalization, a phaser corresponding to phase shifting, and a chorus effector corresponding to chorus. Functions of effectors corresponding other audio effects (such as reverberation, electronic sound, phase shifting, flanger, filter, chorus) are similar, which will not be described in detail here.

For example, an equalization effector, which is also called a frequency compensator or an equalizer, is used to adjust a frequency response curve of an electric guitar. A phaser uses interference effect between a phase-shifted sound wave and an original sound wave, to make the sound produce vibrating, trippy effect. A chorus effector, which is also called a harmonizer, can delay a sound wave and mix it with a normal sound wave, and output mixed sound wave through a main sound track and a right sound track, so that the sound of the electric guitar oscillates from side to side, and is soft and wide, like the effect of a mixed chorus.

It can be understood that, the content included in the audio effect and/or the audio editing is not limited in the embodiments of the present disclosure, which can be determined according to the actual scenario, and details will not be described here.

Optionally, in an embodiment of the present disclosure, the function of audio editing is realized based on the operation on the above-mentioned third control. For example, in response to detecting an operation on the audio optimization control, the audio may be edited to optimize the audio; in response to detecting an operation on an accompaniment separation control, the audio may be separated to separate the vocals and/or accompaniment from the audio; in response to detecting an operation on the style synthesis control, the vocals can be separated from the audio and the separated vocals and the preset accompaniment are mixed and edited, or the accompaniment can be separated from the audio, and the separated accompaniment and the preset vocals are mixed and edited; in response to detecting an operation on the audio mashup control, the vocals can be separated from first audio, the accompaniment can be separated from second audio, and the separated vocals and the separated accompaniment can be mixed and edited. The specific implementation of audio editing is not limited in the embodiments of the present disclosure, which may be determined according to actual needs.

Correspondingly, in an embodiment of the present disclosure, the displaying of one or more third controls in S102 above may be implemented through the following steps:
displaying a first window on the first interface, where the first window includes the one or more third controls; or
displaying the one or more third controls on a second interface.

In an embodiment of the present disclosure, in response to an operation on the first control on the first interface, the electronic device may present one or more third controls through a window, or present one or more third controls through a new interface (for example, the second interface).

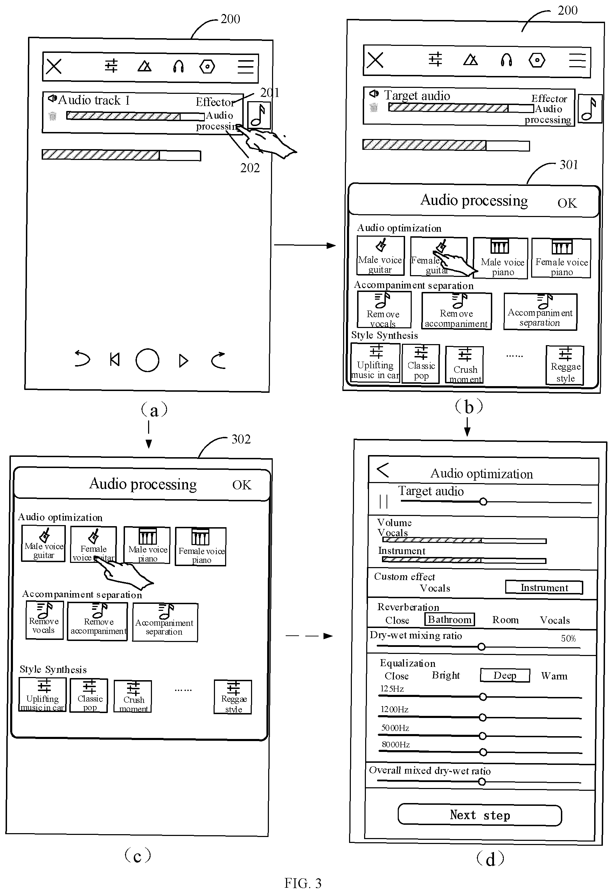

Illustratively, FIG. 3 is a schematic diagram of an audio processing interface in an embodiment of the present disclosure. As shown in (a) in FIG. 3, when the electronic device detects that a user's operation on the first control 202 on the first interface 200, as shown in (b) in FIG. 3, the first window 301 may be presented on the first interface 200, and one or more third controls are presented on the first window 301; or, as shown in (c) in FIG. 3, the interface jumps from the first interface 200 to the second interface 302, to present one or more third controls on the second interface 302.

Optionally, as shown in FIG. 3, the third control may be at least one control or at least a group of controls among audio optimization control, accompaniment separation control, style synthesis control, and audio mashup control.

It can be understood that, the user can also operate on the one or more third controls presented, that is, select a target control by means of voice or touch control, to realize the corresponding audio processing function, and adjust respective involved parameters in the corresponding audio processing function.

Illustratively, continuing to refer to (b) or (c) in FIG. 3, it is assumed that the user performs an operation on an audio optimization control in the audio optimization, for example, touches a female voice guitar control in the audio optimization, and correspondingly, the interface jumps from (b) or (c) in FIG. 3 to (d) in FIG. 3, that is, the audio optimization interface. In the audio optimization interface, the user can control a playing progress of the target audio, and fine-tune various parameters in a desired location. For example, the user can, at a first location of the target audio (for example, a climax part), control the volume of the vocals and instrument, select a custom effect (for example, an instrument), select a reverberation to use (for example, bathroom), adjust a dry-wet mixing ratio, select a type of equalization to use (for example, deep), and adjust, under the equalization type, a proportion of each frequency band (for example, 125Hz, 1200Hz, 5000Hz, 8000Hz, etc.) in the target audio, and can also adjust an overall mixed dry-wet ratio and so on. Correspondingly, after fine-tuning various parameters at the desired location of the target audio, the user can click a control of next step to perform a subsequent operation.

It can be understood that, the parameters fine-tuned in the audio optimization interface and the application degree thereof are not limited in the embodiments of the present disclosure, which can be determined according to actual needs, which will not be described in detail here.

In a possible design of the embodiment of the present disclosure, in the above S101, the first instruction that the electronic device responds to is an operation on a fourth control on a third interface, where the fourth control is configured to trigger displaying of the first control and/or the second control, or trigger switching from the third interface to the first interface.

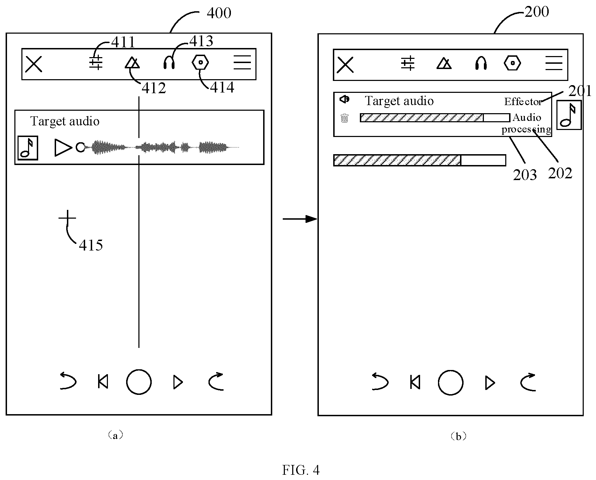

Illustratively, FIG. 4 is a schematic diagram of another audio processing interface provided by an embodiment of the present disclosure. As shown in (a) of FIG. 4, a fourth control 411 is deployed on the third interface 400. A function of the fourth control 411 may be designed to trigger displaying of the second control 201 and the first control 202 on the first interface 200. Therefore, when the user touches the fourth control 411 and the electronic device detects the touch control operation on the fourth control 411, as shown in (b) in FIG. 4, the interface of the electronic device jumps from the third interface 400 to the first interface 200, to display the second control 201 and the first control 202 on a first region 203 of the first interface 200.

In another possible design of the embodiment of the present disclosure, in the above S101, the first instruction that the electronic device responds to is a swiping operation on the third interface, and the first instruction is used to trigger switching from the third interface to the first interface.

Illustratively, when the user performs a swiping operation on the third interface 400, correspondingly, the electronic device may jump to the first interface 200 in response to the swiping operation on the third interface 400, and display the second control 201 and/or the first control 202 on the first interface 200. For a specific schematic diagram of the interface, reference can be made to FIG. 4.

It can be understood that, the first instruction may be a left swiping operation on the third interface 400. Correspondingly, when the user issues a right swiping operation, the interface of the electronic device may be triggered to return from the first interface 200 to the third interface 400, which will not be described in detail here.

Optionally, in the embodiment of the present disclosure, referring to the above-mentioned FIG. 2 to FIG. 4, the third interface 400 and the first interface 200, in addition to including the fourth control 411 (also called an interface switching button, which is configured to trigger switching between the third interface 400 and the first interface 200), may also include:
a metronome switch 412, configured to trigger setting of metronome speed, a time signature, an input device and a preparation beat, etc.;
an earphone monitoring switch 413, configured to trigger an on/off state of an earphone which is connected to the electronic device for monitoring;
other settings 414;
a track adding button 415, configured to trigger loading of a new track.

It can be understood that, the types and functions of the controls included in each interface are not limited in the embodiment of the present disclosure, which can be set according to actual needs, and will not be repeated here.

Illustratively, the following functions can also be supported on a fourth interface 41:
supporting audio editing capability, such as, audio importing and recording, creating a new recording track by clicking a new track button;
supporting importing of audio and video from a file, a photo album and an application, and when importing, in addition to importing directly, also supporting performing accompaniment separation and audio optimization on the audio before importing.

Furthermore, in an embodiment of the present disclosure, after completing various types of audio generation processing and when it is needed to perform duration editing on the audio track, return to the third interface (the audio track interface) and click to select an audio track waveform, the following operations may be supported: audio segmentation, audio cutting, audio copy and segment deletion.

Optionally, a paste button can be called out through a long press on a blank track, and a cut or copied audio can be pasted. In addition, changing the audio duration through dragging the beginning and end of the audio by the user is also supported.

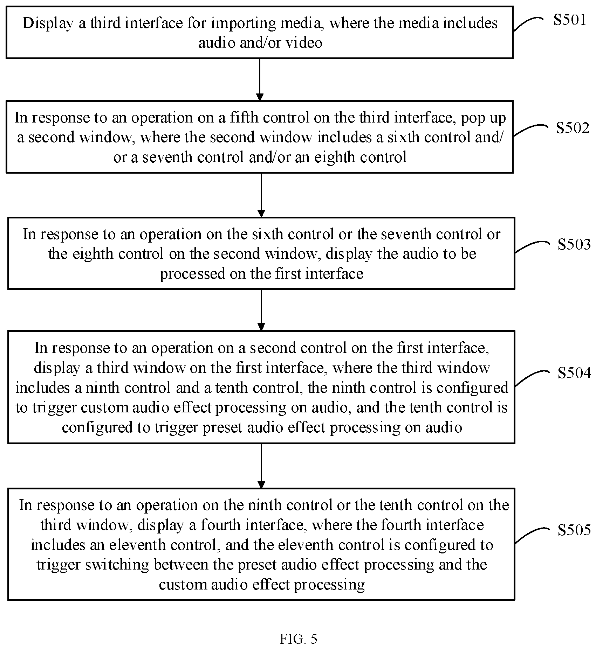

Illustratively, on the basis of the foregoing embodiments, FIG. 5 is a schematic flowchart of another audio processing method provided by an embodiment of the present disclosure. As shown in FIG. 5, in an embodiment of the present disclosure, before the above S101, the audio processing method may include the following steps:

S501, display a third interface for importing media, where the media includes audio and/or video.

Optionally, media is the object to be processed in the embodiment of the present disclosure, so the third interface for importing media may be displayed first, and then subsequent operations may be performed in response to an operation of the user on a control on the third interface. Optionally, the imported media can be audio or video, and at least one piece of audio and at least one piece of video may also be imported respectively, which is not limited here.

S502, in response to an operation on a fifth control on the third interface, pop up a second window, where the second window includes a sixth control and/or a seventh control and/or an eighth control.

The sixth control is configured to trigger importing audio directly, the seventh control is configured to trigger importing of audio, and vocal separating and/or accompaniment separating on the imported audio, and the eighth control is configured to trigger importing of audio, and timbre optimization on the imported audio

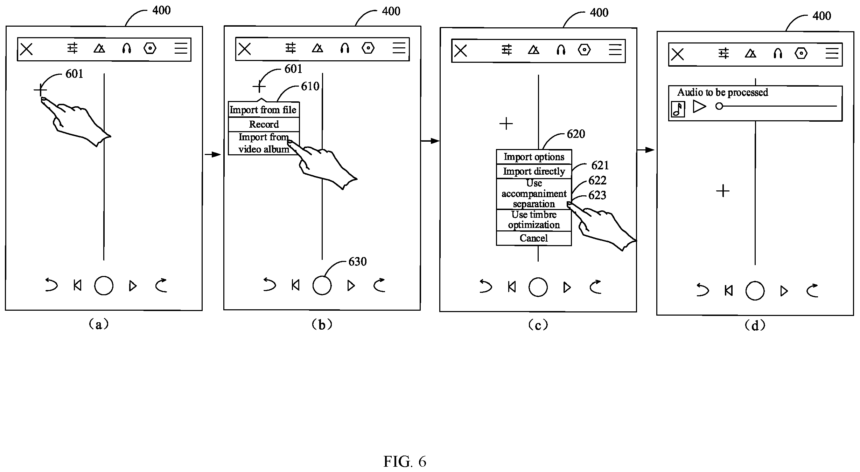

Illustratively, FIG. 6 is a schematic diagram of still another audio processing interface provided by an embodiment of the present disclosure. Referring to (a) in FIG. 6, it is assumed that the third interface 400 is a media importing interface, a fifth control 601 is deployed on the third interface 400, and the fifth control 601 is configured to trigger loading of the media to be processed.

Optionally, in the embodiment, when the user touches the fifth control 601 on the third interface 400, the electronic device would detect the touch control operation, and in response to the touch control operation on the fifth control 601, the electronic device would pop up a second window 620 on the third interface 400, as shown in (c) in FIG. 6, to display the sixth control 621 and/or the seventh control 622 and/or the eighth control 623 for the user to select.

In practical application, when the user touches the fifth control 601, as shown in (b) in FIG. 6, a media loading pop-up window 610 can be presented on the third interface 400. The media loading pop-up window 610 may include a media loading method, such as importing from a file, recording, and importing from a video album. Correspondingly, when the user chooses to import from a file or from a video album, a second window 620 as shown in (c) in FIG. 6 may be presented.

Optionally, the user can choose to load the media by recording. At this time, the electronic device can record audio in response to detecting the user touching a recording control 630 at the bottom of the interface, to present the recorded audio on the third interface.

Optionally, the second window 620 may also include a cancel control, which is configured to trigger cancellation of the importing operation.

S503, in response to an operation on the sixth control or the seventh control or the eighth control on the second window, display the audio to be processed on the first interface.

Illustratively, in this embodiment, the user can select one of the sixth control, the seventh control, or the eighth control presented in the second window to touch according to own needs, and correspondingly, in response to the touch control operation of the user, the electronic device imports audio and presents the audio on the first interface.

As an example, if the user chooses to import directly, the electronic device can directly import the source audio in an album or a file system in response to the operation on the sixth control 621, and present the source audio as the audio to be processed on the first interface 600, as shown in (d) in FIG. 6.

As another example, if the user chooses to use the accompaniment separation, in response to the operation on the seventh control 622, after acquiring the source audio selected by the user from the album or file system, the electronic device may first perform accompaniment separating on the source audio selected by the user, then take the vocals and/or accompaniment separated from the source audio as the audio to be processed and present the audio to be processed on the first interface 600.

As another example, if the user chooses to use the timbre optimization, in response to the operation on the eighth control 623, after acquiring the source audio selected by the user from the album or file system, the electronic device may first perform timbre optimization on the source audio selected by the user first, then take the timbre-optimized audio as the audio to be processed, and present the audio to be processed on the first interface 600.

Optionally, in a possible design of the embodiment of the present disclosure, as shown in FIG. 5, the audio processing method may further include the following steps:

S504, in response to an operation on the second control on the first interface, display a third window on the first interface, where the third window includes a ninth control and a tenth control, the ninth control is configured to trigger custom audio effect processing on the audio, and the tenth control is configured to trigger preset audio effect processing on the audio.

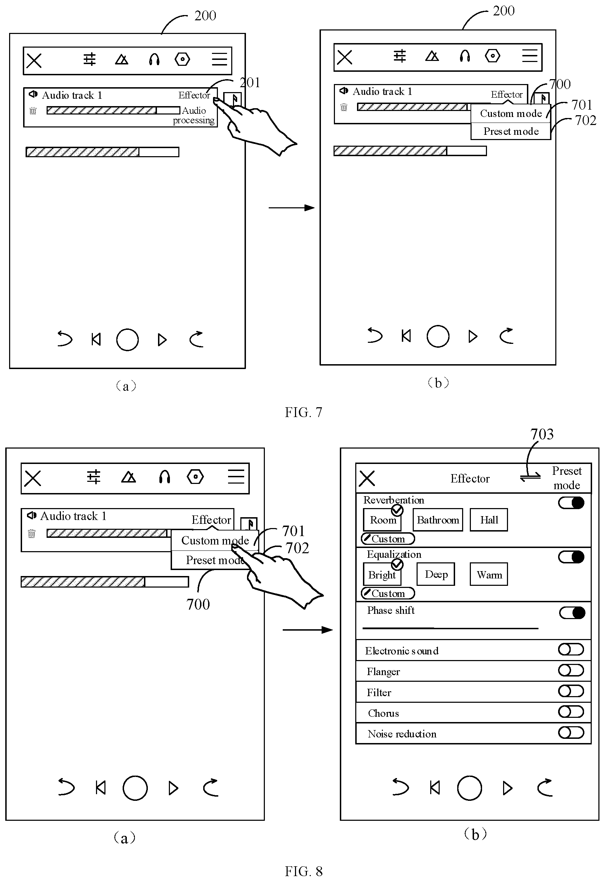

Illustratively, FIG. 7 is a schematic diagram of yet another audio processing interface provided by an embodiment of the present disclosure. Referring to (a) in FIG. 7, the first interface 200 includes a second control 201, which may be an effector control. When the user operates on the second control 201, for example, touches the second control 201, as shown in (b) in FIG. 7, the electronic device may pop up a third window 700 on the first interface 200 in response to the touch control operation. The third window 700 may include a ninth control 701 configured to trigger a custom mode, and a tenth control 702 configured to trigger a preset mode. The ninth control 701 is configured to trigger custom audio effect processing on the audio, and the tenth control 702 is configured to trigger preset audio effect processing on the audio.

Illustratively, in this embodiment, the custom mode indicated by the ninth control 701 can be interpreted as various types of audio effect processing defined by the user according to own needs, and the preset mode indicated by the tenth control 702 can be interpreted as used for selecting a packaged effect presetting.

Illustratively, FIG. 8 is a schematic diagram of yet another audio processing interface provided by an embodiment of the present disclosure. Referring to (a) in FIG. 8, when the user touches the ninth control 701, in response to the touch control operation on the ninth control 701, as shown in (b) in FIG. 8, the electronic device may present various audio types of effect processing for the user to select. For example, the audio effect processing may include, but is not limited to, reverberation, equalization, phase shifting, electronic sound, flanger, filter, chorus, noise reduction, low-cut and other types of effectors. That is, in the custom mode, the interface presents a listing of individual effectors, and the user can choose to activate various types of effectors. Some effectors allow adjustment of parameters other than a dry-wet ratio (for example, the reverberation may include optional parameters of room, bathroom, hall, etc., and equalization, filter, low-cut include adjustable parameters of cut-off frequency and formant).

It can be understood that, in this example, the user can select the type of effector to be used and configure specific parameters of different effectors. The effectors configured by the user will be chained in a preset order. For example, the user may select a room presetting for the reverberation effector, a bright presetting for the equalization effector, an opening degree of the phaser.

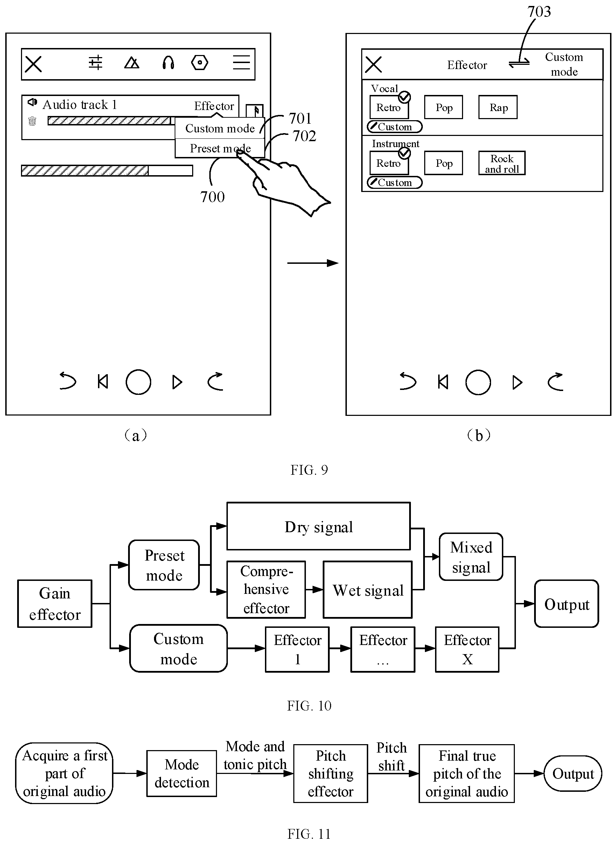

Illustratively, FIG. 9 is a schematic diagram of yet another audio processing interface provided by an embodiment of the present disclosure. Referring to (a) in FIG. 9, when the user touches the tenth control 702, in response to the touch control operation on the tenth control 702, as shown in (b) in FIG. 9, the electronic device can present preset audio effect processing. In the embodiment, that is, in the preset mode, the user can select a preset effector combination to achieve a specific style of effector sound effect, for example, a vocal effector, an instrument effector, and the like.

Optionally, the preset audio effect, that is, a combination effector, will be divided into dry and wet signals. The wet signal is added with an effector while the dry signal is not added with an effector. The user can adjust a volume ratio of the two signals by adjusting the overall dry-wet ratio.

Illustratively, FIG. 10 is a schematic diagram of a process of audio effect processing in the present embodiment. As shown in FIG. 10, the audio effect processing in this embodiment, that is, a gain effector, may include a preset mode and a custom mode. In the preset mode, the audio signal to be processed is divided into two channels, one channel of signal is a dry signal, and the other channel of signal is a wet signal that has been subjected to processing of a synthesis effector. The dry signal and the wet signal are mixed to obtain a mixed signal, and output it.

Optionally, as shown in FIG. 10, in the custom mode, the audio signal to be processed is output after passing through a series of effectors. Optionally, a series of effectors may include effector 1,..., effector x and so on.

It can be understood that, in the embodiment of the present application, when the user chooses to use the electronic sound effector in the custom mode, the electronic device will use the electronic sound effector to automatically modify sound according to a tonic pitch and a mode of the audio.

Illustratively, FIG. 11 is a schematic diagram of principle of an electronic sound effector. In this embodiment, when the user chooses to open the electronic sound effector, as shown in FIG. 11, the application first acquires a first part (for example, clip) of original audio (current audio), and performs mode detecting on the original audio based on the first part, so that after the debugging and detecting, the mode and the tonic pitch of the original audio are acquired. The mode and the tonic pitch of the original audio are shifted by a pitch shifting effector (a pitch shifting parameter) set by the user in the first part (current clip), to obtain a final true pitch of the original audio and output it.

In a possible design of this embodiment, referring to FIG. 5, the audio processing method may further include the following steps:

S505, in response to an operation on the ninth control or the tenth control on the third window, display a fourth interface, where the fourth interface includes an eleventh control, and the eleventh control is configured to trigger switching between the preset audio effect processing and the custom audio effect processing.

Optionally, in an embodiment of the present disclosure, referring to (b) in FIG. 8, in response to the user's operation on the ninth control on the third window, the electronic device presents a fourth interface, which is custom audio effect processing corresponding to the custom mode. On the fourth interface, an eleventh control 703 is also included. The eleventh control 703 can switch the audio effect processing mode to the preset mode.

Similarly, referring to (b) in FIG. 9, in response to the user's operation on the tenth control on the third window, the electronic device presents a fourth interface which is preset audio effect processing corresponding to the preset mode. On the fourth interface, an eleventh control 703 is also included. The eleventh control 703 can switch the audio effect processing mode to the custom mode.

In the embodiment of the present disclosure, the mode of audio effect processing can be switched based on the user's operation, which improves the intelligence of audio processing and improves user experience.

Based on the above-mentioned embodiments, after the user performs all operations on the target audio, the target audio can be exported or shared or saved as a project.

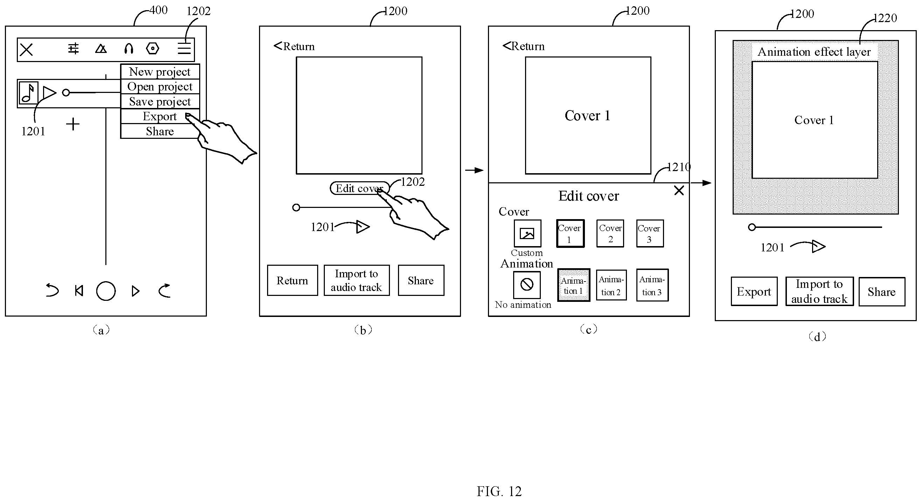

Illustratively, FIG. 12 is a schematic diagram of yet another audio processing interface provided by an embodiment of the present disclosure. As shown in (a) in FIG. 12, after the electronic device presents the acquired target audio on the third interface 400, and after the user plays the target audio via a play control 1201 on the third interface 400 and listens to the target audio, when it is determined that the target audio has satisfied a requirement, the user can issue an audio export instruction to export the target audio to a target location.

Illustratively, referring to (a) in FIG. 12, in response to a touch control operation on a file control 1202 on the third interface 400, the electronic device may display a pop-up window on the third interface 400. The pop-up window can include controls, such as new project, open project, save project, export, and share.

The new project is used to trigger establishing of a new project, the open project is used to trigger opening of an established project, and the save project is used to trigger saving of a project processed currently. It can be understood that, when the project is saved, renaming of the project is supported for subsequent project management.

Optionally, referring to (a) and (b) in FIG. 12, when the electronic device detects an operation on the export control and the share control, the electronic device may trigger jump of the interface, for example, jumping from the third interface 400 to the fifth interface 1200 to edit the interface, or the electronic device may directly export or save data associated with the target audio.

Illustratively, in an embodiment of the present disclosure, the audio processing method may further include: displaying the target audio on the fifth interface.

Illustratively, as shown in (b) in FIG. 12, the fifth interface 1200 includes a twelfth control 1201. The twelfth control 1201 is configured to trigger playing of the target audio.

Optionally, in (b) in FIG. 12, the fifth interface 1200 further includes a thirteenth control 1202, that is, an interface editing control. The thirteenth control 1202 is configured to trigger editing of an audio cover.

Optionally, in (b) in FIG. 12, the fifth interface 1200 further includes an export control, an import to audio track control, and a share control. The export control is configured to trigger exporting of the target audio to a target location, the import to audio track control is configured to trigger importing of the target audio to the track interface for processing, and the share control is used to trigger sharing of the target audio to a target application. It can be understood that, the controls included on the fifth interface and the function of each control are not limited in the embodiment, which will not be described in detail here.

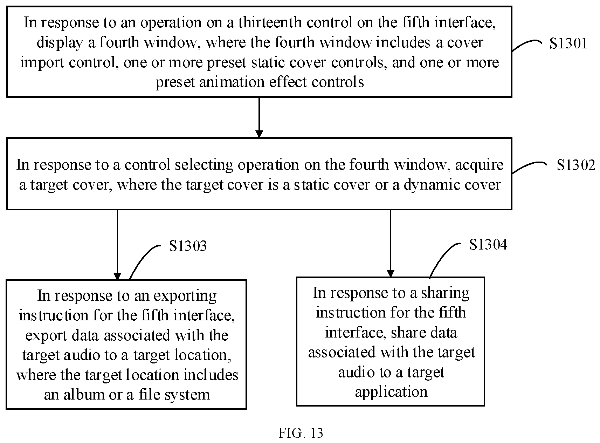

Illustratively, FIG. 13 is a schematic flowchart of yet another audio processing method provided by an embodiment of the present disclosure. As shown in FIG. 13, in an embodiment of the present disclosure, the audio processing method may further include the following steps:

S1301, in response to an operation on a thirteenth control on the fifth interface, display a fourth window, where the fourth window includes a cover importing control, one or more preset static cover controls, and one or more preset animation effect controls.

In an embodiment of the present disclosure, when the electronic device presents a thirteenth control 1202 for triggering cover editing, the user may issue a cover editing instruction through the thirteenth control 1202. For example, when the electronic device detects a touch control operation on the thirteenth control 1202 by the user, in response to the touch control operation, the electronic device may present an interface as shown in (c) in FIG. 12.

Referring to (c) in FIG. 12, a window may be presented at the bottom of the fifth interface 1200. In this embodiment, this window is called a fourth window 1210. In the fourth window 1210, there are a cover part and an animation part.

Optionally, the cover part includes a custom cover import control and one or more preset static cover controls. The cover import control is configured to trigger importing of a local picture, and the one or more preset static cover controls are configured to trigger selecting of a preset static cover. It can be understood that, the static covers are a plurality of pictures preset in a target application of the electronic device, for example, cover 1, cover 2 and cover 3.

Optionally, the animation part includes a no-animation control and one or more preset animation effect controls. The no-animation control is configured to determine not to select animation, that is, the cover generated by the electronic device has no animation effect. The one or more preset animation effect controls are configured to trigger selecting of a preset animation effect. It can be understood that, animation effects refer to a variety of dynamic changing forms preset in the target application of the electronic device, for example, the animation effect may include animation 1, animation 2 and animation 3.

S1302, in response to a control selecting operation on the fourth window, acquire a target cover, where the target cover is a static cover or a dynamic cover.

In this embodiment, the user may select from various controls presented on the fifth interface according to actual needs. For example, when the user touches the custom cover import control, the electronic device can use a locally imported photo as the static cover of the audio. When the user selects the no animation control from the animation part, the generated target cover is a static cover.

As another example, when the user selects a cover from the cover part and an animation from the animation part respectively, a dynamic cover can be generated. Specifically, in the embodiment of the present disclosure, if the target cover is a dynamic cover, S1302 may be implemented through the following steps:

B1, in response to a control selecting operation on the fourth window, acquiring a static cover and an animation effect;

B2, generating, according to an audio feature of the target audio, the static cover and the animation effect, a dynamic cover which changes with an audio feature of the target audio, where the audio feature includes audio tempo and/or volume.

Optionally, in this embodiment, the electronic device can detect the control selecting operation by the user. For example, as shown in (c) in FIG. 12, when the user selects cover 1 and animation 1, the electronic device will detect selecting operations on a control corresponding to cover 1 and a control corresponding to animation 1 in the fourth window 1210. In response to the control selecting operations, the electronic device can generate a dynamic cover 1220 as shown in (d) in FIG. 12. The dynamic cover 1220 can include the cover 1 and an animation effect layer corresponding to the animation 1.

It can be understood that, in the embodiment of the present disclosure, when the user clicks the twelfth control 1201 under the dynamic cover 1220 in FIG. 12 (d), in response to the clicking operation on the twelfth control 1201, the electronic device can play the target audio, and at this time, the dynamic cover can change in real time along with an audio feature such as audio tempo and/or volume of the target audio.

Optionally, when the final audio processing and editing operations are completed, the electronic device can also export the audio in response to the user's operation, and supports exporting to an album or a file, and the cover can be replaced when exporting to the album. After the export is completed, a choice may be made between completion or sharing the audio to a target application. In addition, sharing the audio to a file may also be a choice. At this time, a compressed package including the audio would be automatically generated, which is convenient for the user to send to other locations for further editing.

Optionally, in an embodiment of the present disclosure, after the above S1302, the audio processing method may further include the following steps:

S1303, in response to an exporting instruction for the fifth interface, export data associated with the target audio to a target location, where the target location includes an album or a file system.

Optionally, the exporting instruction may be a voice, a touch control operation on the export control, and the like.

For example, when a voice recognition function on the fifth interface is turned on, the user can issue an exporting instruction by voice.

For another example, as shown in (b) and (d) in FIG. 12, the fifth interface 1200 also includes an export control. Correspondingly, when the user touches or presses the export control on the fifth interface, in response to the touch control operation on the export control, the electronic device can export data associated with the target audio to a target location, for example, to an album or a file system.

Optionally, in an embodiment of the present disclosure, after the above S1302, the audio processing method may further include the following steps:

S1304, in response to a sharing instruction for the fifth interface, share data associated with the target audio to a target application.

Illustratively, the sharing instruction may be a voice, a touch control operation on the sharing control, and the like. For example, when a voice recognition function on the fifth interface is turned on, the user can issue a sharing instruction by voice.

For another example, as shown in (b) and (d) in FIG. 12, the fifth interface 1200 also includes a sharing control. Correspondingly, in this embodiment, when the user touches or presses the sharing control on the fifth interface, in response to the touch control operation on the sharing control, the electronic device can share the data associated with the target audio to the target application, for example, various applications such as a short video application or a small program application or a chat application.

It can be understood that, in the embodiment of the present disclosure, the above-mentioned data associated with the target audio includes at least one of the following:
the target audio, vocals, an accompaniment, a static cover of the target audio, and a dynamic cover of the target audio.

It can be understood that, in this embodiment, the data associated with the target audio can be material, for example an audio clip and audio data (such as vocals, an accompaniment, etc.) at various stages of audio processing, and can also be material, for example the static cover of the target audio, the dynamic cover of the target audio, and can also be a compressed package compressed from a plurality of audio data, or a material package, etc. The specific form of the data associated with the target audio is not limited in this embodiment.

Illustratively, the electronic device can share and/or export various data related to the target audio. For example, the electronic device can export and/or share the generated target audio based on the user's instruction, can also export and/or share the vocal or accompaniment in audio processing, and can also export and/or share the generated target cover (the static cover or the dynamic cover) together with the target audio, which is not limited in this embodiment.

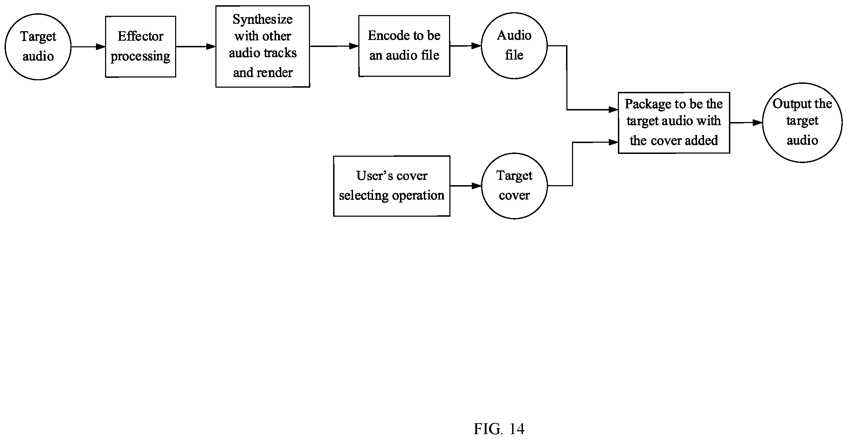

Optionally, FIG. 14 is a schematic diagram of an implementation principle of saving an audio file provided by an embodiment of the present disclosure. As shown in FIG. 14, in this embodiment, when the electronic device detects the user's saving instruction, on the one hand, the electronic device first performs effector processing on the audio track of the target video in a form of audio blocks, and then synthesizes other audio tracks in the audio processing process and renders the synthesized result, and then performs audio encoding on the rendered result to output an audio file. On the other hand, in response to the user's cover selecting operation, the electronic device generates the target cover (the static cover or the dynamic cover); and finally, packages the audio file and the target cover together to obtain the target audio with the cover added.

For the specific implementation of each step in this embodiment, reference may be made to the description in the foregoing embodiments, which will not be repeated here.

From the contents described in the above-mentioned embodiments, it can be seen that the audio processing method provided by the embodiments of the present disclosure provides a result that is opening to the user and that has an output with the accompaniment separated, meets diversified demands of users, and provides interface jumping from the accompaniment separating function to the audio track processing, which not only saves the paths of interface jumping, but also provides the possibility of subsequent edition and creation on the result of the accompaniment separation. The method provides a new way of saving, that is, it supports saving to a file and an album, and supports replacing of the cover of the file, which improves the intelligence of the application program to which the audio processing method is applicable, and improves user experience.

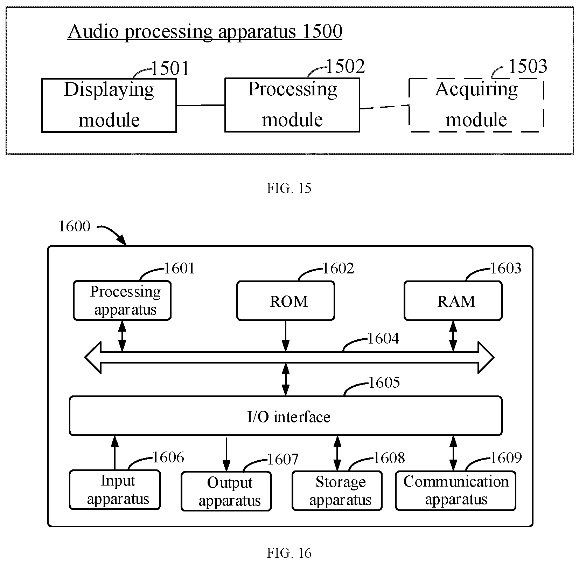

Corresponding to the audio processing method in the above embodiments, FIG. 15 is a structural block diagram of an audio processing apparatus provided by an embodiment of the present disclosure. For convenience of description, only the parts related to the embodiments of the present disclosure are shown. As shown in FIG. 15, the audio processing apparatus 1500 provided by the embodiment includes: a displaying module 1501 and a processing module 1502.

The displaying module 1501 is configured to, in response to a first instruction, display a first control on a first interface, where the first control is associated with audio editing;
where the displaying module 1501 is further configured to, in response to an operation on the first control on the first interface, display one or more third controls, where the one or more third controls are configured to trigger corresponding audio editing on audio;

The processing module 1502 is configured to, in response to an operation on a third control of the one or more third controls, trigger audio editing corresponding to the third control on audio to be processed, to acquire target audio.

In an optional embodiment of the present disclosure, the first interface further includes a second control, where the second control is associated with audio effect processing.

In an optional embodiment of the present disclosure, the audio effect includes one or more of the following: reverberation, equalization, electronic sound, phase shifting, flanger, filter, chorus;
the audio editing includes one or more of the following: editing audio to optimize the audio; separating vocals and/or an accompaniment from audio; separating vocals from audio and mixing the separated vocals with a preset accompaniment; and separating vocals from first audio, separating an accompaniment from second audio, and mixing the separated vocals with the separated accompaniment.

In an optional embodiment of the present disclosure, the displaying module 1501 is specifically configured to display a first window on the first interface, where the first window includes the one or more third controls; or, the displaying module 1501 is specifically configured to display the one or more third controls on a second interface.

In an optional embodiment of the present disclosure, the first instruction is an operation on a fourth control on the third interface, where the fourth control is configured to trigger displaying of the first control and/or the second control, or
the first instruction is a swiping operation on a third interface, where the first instruction is used to trigger switching from the third interface to the first interface.

In an optional embodiment of the present disclosure, the displaying module 1501 is further configured to:
display a third interface for importing media, where the media includes audio and/or video;
in response to an operation on a fifth control on the third interface, pop up a second window, where the second window includes a sixth control and/or a seventh control and/or an eighth control, and the sixth control is configured to trigger importing audio directly, the seventh control is configured to trigger importing of audio, and vocal separating and/or accompaniment separating on the imported audio, and the eighth control is configured to trigger importing of audio and timbre optimization on the imported audio;
in response to an operation on the sixth control or the seventh control or the eighth control on the second window, display the audio to be processed on the first interface.

In an optional embodiment of the present disclosure, the displaying module 1501 is further configured to, in response to an operation on the second control on the first interface, display a third window on the first interface, where the third window includes a ninth control and a tenth control, where the ninth control is configured to trigger custom audio effect processing on the audio, and the tenth control is configured to trigger preset audio effect processing on the audio.

In an optional embodiment of the present disclosure, the displaying module 1501 is further configured to, in response to an operation on the ninth control or the tenth control on the third window, display a fourth interface, where the fourth interface includes an eleventh control, and the eleventh control is configured to trigger switching between the preset audio effect processing and the custom audio effect processing.

In an optional embodiment of the present disclosure, the displaying module 1501 is further configured to display the target audio on a fifth interface, where the fifth interface includes a twelfth control, and the twelfth control is configured to trigger playing of the target audio.

In an optional embodiment of the present disclosure, the fifth interface further includes a thirteenth control, and correspondingly, the displaying module 1501 is further configured to, in response to an operation on the thirteenth control on the fifth interface, display a fourth window, where the fourth window includes a cover import control, one or more preset static cover controls, and one or more preset animation effect controls;
correspondingly, the audio processing apparatus 1500 also includes:
an acquiring module 1503, configured to, in response to a control selecting operation on the fourth window, acquire a target cover;
where the target cover is a static cover or a dynamic cover.

In an optional embodiment of the present disclosure, if the target cover is a dynamic cover, the acquiring module 1503 is specifically configured to, in response to a control selecting operation on the fourth window, acquire a static cover and an animation effect;
the processing module 1502 is configured to generate, according to an audio feature of the target audio, the static cover and the animation effect, a dynamic cover which changes with the audio feature of the target audio;
where the audio feature includes audio tempo and/or volume.

In an optional embodiment of the present disclosure, the processing module 1502 is further configured to, in response to an exporting instruction for the fifth interface, export data associated with the target audio to a target location, where the target location includes an album or a file system.

In an optional embodiment of the present disclosure, the processing module 1502 is further configured to, in response to a sharing instruction for the fifth interface, share data associated with the target audio to a target application.

Optionally, the data associated with the target audio includes at least one of the following:
the target audio, vocals, an accompaniment, a static cover of the target audio, and a dynamic cover of the target audio.

The audio processing apparatus provided in the embodiments can be used to implement the technical solutions of the above method embodiments, and the implementation principles and technical effects thereof are similar, which will not be repeated here in these embodiments.

FIG. 16 is a structural block diagram of an electronic device provided by an embodiment of the present disclosure. As shown in FIG. 16, an electronic device 1600 may be a terminal device or a server. The terminal device may include, but is not limited to, a mobile terminal, such as a mobile phone, a notebook computer, a digital broadcast receiver, a personal digital assistant (Personal Digital Assistant, PDA for short), a portable android device (Portable Android Device, PAD for short), a portable media player (Portable Media Player, PMP for short), an on-vehicle terminal (for example, vehicle navigation terminal), etc., and a fixed terminal such as a digital TV, a desktop computer, etc. The electronic device shown in FIG. 16 is only an example, and should not bring any limitation to the function and scope of use for the embodiments of the present disclosure.

As shown in FIG. 16, the electronic device 1600 may include a processing apparatus 1601 (such as a central processing unit, a graphics processor, etc.), which may execute suitable actions and processing according to programs stored in a read-only memory (Read Only Memory, ROM for short) 1602 or programs loaded into a random access memory (Random Access Memory, RAM for short) 1603 from a storage apparatus 1608. In the RAM 1603, various programs and data required for the operation of the electronic device 1600 are also stored. The processing apparatus 1601, the ROM 802, and the RAM 1603 are connected to each other through a bus 1604. An input/output (Input/Output, I/O for short) interface 1605 is also connected to the bus 1604.

Generally, the following apparatuses can be connected to the I/O interface 1605: an input apparatus 1606, including, for example, a touch screen, a touch pad, a keyboard, a mouse, a camera, a microphone, an accelerometer, a gyroscope, etc.; an output apparatus 1607, including, for example, a liquid crystal display (Liquid Crystal Display, LCD for short), a speaker, a vibrator , etc.; a storage apparatus 1608, including, for example, a magnetic tape, a hard disk, etc., and a communication apparatus 1609. The communication apparatus 1609 allows the electronic device 1600 to perform wireless or wired communication with other devices to exchange data. Although FIG. 16 shows the electronic device 1600 with multiple kinds of apparatuses, it is not required to implement or have all the apparatuses shown in FIG. 3. It may alternatively be implemented or provided with more or fewer apparatuses.

In particular, according to an embodiment of the present disclosure, the process described above with reference to the flowchart may be implemented as a computer software program. For example, an embodiment of the present disclosure includes a computer program product, which includes a computer program carried on a computer-readable medium, and the computer program contains program codes for executing the method shown in the flowchart. In such an embodiment, the computer program may be downloaded and installed from the network through the communication apparatus 1609, or installed from the storage apparatus 1608, or installed from the ROM 1602. When the computer program is executed by the processing apparatus 1601, the above-mentioned functions defined in the method of the embodiment of the present disclosure are executed.

It should be noted that the above-mentioned computer-readable medium in the present disclosure may be a computer-readable signal medium or a computer-readable storage medium, or any combination thereof. The computer-readable storage medium may be, for example, but not limited to, an electrical, magnetic, optical, electromagnetic, infrared, or semiconductor system, apparatus, or device, or any combination thereof. More specific examples of the computer readable storage medium may include, but are not limited to: an electrical connection with one or more wires, a portable computer disk, a hard disk, a random access memory (RAM), a read only memory (ROM), an erasable programmable read-only memory (Electrical Programmable Read-Only Memory, EPROM for short, or flash), an optical fiber, a compact disc read-only memory (Compact Disc Read-Only Memory, CD-ROM for short), an optical storage device, a magnetic storage device, or any suitable combination of the above. In the present disclosure, a computer-readable storage medium may be any tangible medium that includes or stores programs, and the programs may be used by or in combination with an instruction execution system, apparatus, or device. In the present disclosure, a computer-readable signal medium may include a data signal propagated in a baseband or as a part of a carrier wave, and a computer-readable program code is carried therein. This propagated data signal can take many forms, including but not limited to an electromagnetic signal, an optical signal, or any suitable combination thereof. The computer readable signal medium may also be any computer readable medium other than the computer readable storage medium, the computer readable signal medium may send, propagate, or transmit the program used by or in combination with the instruction execution system, apparatus, or device. The program code included on the computer-readable medium can be transmitted by any suitable medium, including but not limited to: a wire, an optical cable, RF (Radio Frequency), etc., or any suitable combination thereof.

The above-mentioned computer-readable medium may be included in the above-mentioned electronic device; or it may exist alone without being assembled into the electronic device.

The above computer-readable medium carries one or more programs, and when the foregoing one or more programs are executed by the electronic device, the electronic device is caused to execute the method shown in the foregoing embodiment.

The computer program code used to perform the operations of the present disclosure can be written in one or more programming languages or a combination thereof. The above-mentioned programming languages include object-oriented programming languages-such as Java, Smalltalk, C++, and also include conventional procedural programming language-such as "C" language or similar programming language. The program code may be executed entirely on a user computer, partly on a user computer, executed as an independent software package, partly executed on a user computer and partly executed on a remote computer, or entirely executed on a remote computer or server. In the case of a remote computer, the remote computer can be connected to a user computer through any kind of network, including a local area network (Local Area Network, LAN for short) or a wide area network (Wide Area Network, WAN for short), or it can be connected to an external computer (for example, using an Internet service provider via an Internet connection).

The flowcharts and block diagrams in the accompanying drawings illustrate possible implementation architecture, functions, and operations of the system, method, and computer program product according to the embodiments of the present disclosure. In this point, each block in the flowchart or block diagram may represent a module, a program segment, or a part of code, and the module, the program segment, or the part of code contains one or more executable instructions for implementing a designated logical function. It should also be noted that, in some alternative implementations, the functions marked in the blocks may also occur in a different order from the order marked in the drawings. For example, two blocks shown one after another may actually be executed substantially in parallel, or sometimes may be executed in a reverse order, which depends on the functions involved. It should also be noted that each block in the block diagram and/or flowchart, and the combination of the blocks in the block diagram and/or flowchart, can be implemented by a dedicated hardware-based system that performs the specified functions or operations, or it can be implemented by a combination of dedicated hardware and computer instructions.

The apparatuses or modules involved in the embodiments described in the present disclosure may be implemented in software or hardware. A name of the apparatus does not constitute a limitation on the device or the module itself under certain circumstances.

The functions described herein above may be performed at least in part by one or more hardware logic components. For example, non-restrictively, exemplary types of hardware logic components that may be used include: a field programmable gate array (Field Programmable Gate Array, FPGA for short), an application specific integrated circuit (Application Specific Integrated Circuit, ASIC for short), an application specific standard product (Application Specific Standard Parts, ASSP for short), a system on chip (System on Chip, SOC for short), a complex programmable logic device (Complex Programming Logic Device, CPLD for short), etc.

In the context of the present disclosure, a machine-readable medium may be a tangible medium, which may contain or store a program for use by or in combination with an instruction execution system, apparatus or device. The machine readable medium may be a machine readable signal medium or a machine readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage media may include an electrical connection with one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof.

In a first aspect, according to one or more embodiments of the present disclosure, an audio processing method is provided, including:
in response to a first instruction, displaying a first control on a first interface, where the first control is associated with audio editing;
in response to an operation on the first control on the first interface, displaying one or more third controls, where the one or more third controls are configured to trigger corresponding audio editing on audio; and
in response to an operation on a third control of the one or more third controls, triggering audio editing corresponding to the third control on the audio to be processed, to acquire target audio.

According to one or more embodiments of the present disclosure, the first interface further includes a second control, where the second control is associated with audio effect processing.

According to one or more embodiments of the present disclosure, the audio effect includes one or more of the following: reverberation, equalization, electronic sound, phase shifting, flanger, filter, chorus;
the audio editing includes one or more of the following: editing audio to optimize the audio; separating vocals and/or an accompaniment from audio; separating vocals from audio and mixing the separated vocals with a preset accompaniment; and separating vocals from first audio, separating an accompaniment from second audio, and mixing the separated vocals with the separated accompaniment.

According to one or more embodiments of the present disclosure, the displaying one or more third controls includes:
displaying a first window on the first interface, where the first window includes the one or more third controls; or
displaying the one or more third controls on a second interface.

According to one or more embodiments of the present disclosure, the first instruction is an operation on a fourth control on a third interface, where the fourth control is configured to trigger displaying of the first control and/or the second control, or
the first instruction is a swiping operation on a third interface, where the first instruction is used to trigger switching from the third interface to the first interface.

According to one or more embodiments of the present disclosure, before in response to the first instruction, displaying the first control on the first interface, the method further includes:
displaying a third interface for importing media, where the media includes audio and/or video;
in response to an operation on a fifth control on the third interface, popping up a second window, where the second window includes a sixth control and/or a seventh control and/or an eighth control, and the sixth control is configured to trigger importing audio directly, the seventh control is configured to trigger importing of audio, and vocal separating and/or accompaniment separating on the imported audio, and the eighth control is configured to trigger importing of audio, and timbre optimization on the imported audio;
in response to an operation on the sixth control or the seventh control or the eighth control on the second window, display the audio to be processed on the first interface.

According to one or more embodiments of the present disclosure, the method further includes:
in response to an operation on the second control on the first interface, displaying a third window on the first interface, where the third window includes a ninth control and a tenth control, where the ninth control is configured to trigger custom audio effect processing on the audio, and the tenth control is configured to trigger preset audio effect processing on the audio.

According to one or more embodiments of the present disclosure, the method further includes: in response to an operation on the ninth control or the tenth control on the third window, displaying a fourth interface, where the fourth interface includes an eleventh control, and the eleventh control is configured to trigger switching between the preset audio effect processing and the custom audio effect processing.

According to one or more embodiments of the present disclosure, the method further includes: displaying the target audio on a fifth interface, where the fifth interface includes a twelfth control, and the twelfth control is configured to trigger playing of the target audio.

According to one or more embodiments of the present disclosure, the fifth interface further includes a thirteenth control, and the method further includes:
in response to an operation on the thirteenth control on the fifth interface, displaying a fourth window, where the fourth window includes a cover import control, one or more preset static cover controls, and one or more preset animation effect controls; and
in response to a control selecting operation on the fourth window, acquiring a target cover;
where the target cover is a static cover or a dynamic cover.

According to one or more embodiments of the present disclosure, if the target cover is a dynamic cover, the in response to the control selecting operation on the fourth window, acquiring the target cover includes:
in response to a control selecting operation on the fourth window, acquiring a static cover and an animation effect; and
generating, according to an audio feature of the target audio, the static cover and the animation effect, a dynamic cover which changes with the audio feature of the target audio;
where the audio feature includes audio tempo and/or volume.

According to one or more embodiments of the present disclosure, the method further includes:
in response to an exporting instruction for the fifth interface, exporting data associated with the target audio to a target location, where the target location includes an album or a file system.

According to one or more embodiments of the present disclosure, the method further includes:
in response to a sharing instruction for the fifth interface, sharing data associated with the target audio to a target application.

According to one or more embodiments of the present disclosure, the data associated with the target audio includes at least one of the following:
the target audio, vocals, an accompaniment, a static cover of the target audio, and a dynamic cover of the target audio.

In a second aspect, according to one or more embodiments of the present disclosure, an audio processing apparatus is provided, including:
a displaying module, configured to, in response to a first instruction, display a first control on a first interface, where the first control is associated with audio editing;
where the displaying module is further configured to, in response to an operation on the first control on the first interface, display one or more third controls, where the one or more third controls are configured to trigger corresponding audio editing on audio;
a processing module, configured to, in response to an operation on a third control of the one or more third controls, trigger audio editing corresponding to the third control on audio to be processed, to acquire target audio.

According to one or more embodiments of the present disclosure, the first interface further includes a second control, where the second control is associated with audio effect processing.

According to one or more embodiments of the present disclosure, the audio effect includes one or more of the following: reverberation, equalization, electronic sound, phase shifting, flanger, filter, chorus;
the audio editing includes one or more of the following: editing audio to optimize the audio; separating vocals and/or an accompaniment from audio; separating vocals from audio and mixing the separated vocals with a preset accompaniment; and separating vocals from first audio, separating an accompaniment from second audio, and mixing the separated vocals with the separated accompaniment.

According to one or more embodiments of the present disclosure, the displaying module is specifically configured to display a first window on the first interface, where the first window includes the one or more third controls, or
the displaying module is specifically configured to display the one or more third controls on a second interface.

According to one or more embodiments of the present disclosure, the first instruction is an operation on a fourth control on a third interface, where the fourth control is configured to trigger displaying of the first control and/or the second control, or
the first instruction is a swiping operation on a third interface, where the first instruction is used to trigger switching from the third interface to the first interface.

According to one or more embodiments of the present disclosure, the displaying module is further configured to:
display a third interface for importing media, where the media includes audio and/or video;
in response to an operation on a fifth control on the third interface, pop up a second window, where the second window includes a sixth control and/or a seventh control and/or an eighth control, and the sixth control is configured to trigger importing audio directly, the seventh control is configured to trigger importing of audio, and vocal separating and/or accompaniment separating on the imported audio, and the eighth control is configured to trigger importing of audio, and timbre optimization on the imported audio; and
in response to an operation on the sixth control or the seventh control or the eighth control on the second window, display the audio to be processed on the first interface.

According to one or more embodiments of the present disclosure, the displaying module is further configured to, in response to an operation on the second control on the first interface, display a third window on the first interface, where the third window includes a ninth control and a tenth control, where the ninth control is configured to trigger custom audio effect processing on the audio, and the tenth control is configured to trigger preset audio effect processing on the audio.

According to one or more embodiments of the present disclosure, the displaying module is further configured to, in response to an operation on the ninth control or the tenth control on the third window, display a fourth interface, where the fourth interface includes an eleventh control, and the eleventh control is configured to trigger switching between the preset audio effect processing and the custom audio effect processing.

According to one or more embodiments of the present disclosure, the displaying module is further configured to display the target audio on a fifth interface, where the fifth interface includes a twelfth control, and the twelfth control is configured to trigger playing of the target audio.

According to one or more embodiments of the present disclosure, the fifth interface further includes a thirteenth control, and correspondingly, the displaying module is further configured to, in response to an operation on the thirteenth control on the fifth interface, display a fourth window, where the fourth window includes a cover import control, one or more preset static cover controls, and one or more preset animation effect controls;
the audio processing apparatus further includes:
an acquiring module, configured to, in response to a control selecting operation on the fourth window, acquire a target cover;
where the target cover is a static cover or a dynamic cover.

According to one or more embodiments of the present disclosure, if the target cover is a dynamic cover, the acquiring module is specifically configured to:
in response to a control selecting operation on the fourth window, acquire a static cover and an animation effect;
where the processing module is configured to generate, according to an audio feature of the target audio, the static cover and the animation effect, a dynamic cover which changes with the audio feature of the target audio;
where the audio feature includes audio tempo and/or volume.

According to one or more embodiments of the present disclosure, the processing module is further configured to, in response to an exporting instruction for the fifth interface, export data associated with the target audio to a target location, where the target location includes an album or a file system.

According to one or more embodiments of the present disclosure, the processing module is further configured to, in response to a sharing instruction for the fifth interface, share data associated with the target audio to a target application.

Optionally, the data associated with the target audio includes at least one of the following:
the target audio, vocals, an accompaniment, a static cover of the target audio, and a dynamic cover of the target audio.

In a third aspect, according to one or more embodiments of the present disclosure, an electronic device is provided, including: at least one processor and a memory;
where the memory stores computer-executable instructions; and
the at least one processor executes the computer-executable instructions stored in the memory, to cause the at least one processor to execute the audio processing method according to the above first aspect and any possible designs of the first aspect.

In a fourth aspect, according to one or more embodiments of the present disclosure, a computer-readable storage medium is provided. The computer-readable storage medium has computer-executable instructions stored thereon, and when a processor executes the computer-executable instructions, the audio processing method according to the above first aspect and any possible designs of the first aspect is implemented.

In a fifth aspect, according to one or more embodiments of the present disclosure, a computer program product is provided, including a computer program, where when the computer program is executed by a processor, the audio processing method according to the above first aspect and any possible designs of the first aspect is implemented.

The above description is only preferred embodiments of the present disclosure and an explanation of the applied technical principles. Those skilled in the art should understand that the scope of disclosure involved in the present disclosure is not limited to the technical solutions formed by the specific combination of the above technical features, and should also cover other technical solutions formed by the above technical features or equivalent features without departing from the above disclosed concept. For example, the above-mentioned features and the technical features disclosed in the present disclosure (but not limited to) having similar functions are replaced with each other to form a technical solution.

In addition, although various operations are described in a specific order, this should not be understood as requiring these operations to be performed in the specific order or in a sequential order shown. Under certain circumstances, multitasking and parallel processing may be advantageous. Similarly, although several specific implementation details are included in the above discussion, these should not be interpreted as limiting the scope of the present disclosure. Certain features that are described in the context of separate embodiments may also be implemented in combination in a single embodiment. On the contrary, various features described in the context of a single embodiment may also be implemented in multiple embodiments individually or in any suitable subcombination.

Although the subject matter has been described in language specific to a structural feature and/or a logical action of the method, it should be understood that the subject matter defined in the appended claims is not necessarily limited to the specific features or actions described above. On the contrary, the specific features and actions described above are only exemplary forms for implementing the claims.

## Claims

1. An audio processing method, comprising:
in response to a first instruction, displaying a first control on a first interface, wherein the first control is associated with audio editing;
in response to a touch control operation on the first control on the first interface, displaying one or more third controls, wherein the one or more third controls are configured to trigger corresponding audio editing on audio to be processed; and
in response to a touch control operation on a third control of the one or more third controls, triggering audio editing corresponding to the third control on the audio to be processed, to acquire target audio.

2. The method according to claim 1, wherein the first interface further comprises a second control, wherein the second control is associated with audio effect processing.

3. The method according to claim 2, wherein
the audio effect includes one or more of the following: reverberation, equalization, electronic sound, phase shifting, flanger, filter, chorus; and
the audio editing includes one or more of the following: editing audio to optimize the audio; separating vocals and/or an accompaniment from audio; separating vocals from audio and mixing the separated vocals with a preset accompaniment; or separating vocals from first audio, separating an accompaniment from second audio, and mixing the separated vocals with the separated accompaniment.

4. The method according to any one of claims 1 to 3, wherein the displaying one or more third controls comprises:
displaying a first window on the first interface, wherein the first window comprises the one or more third controls; or
displaying the one or more third controls on a second interface.

5. The method according to any one of claims 2 to 4, wherein
the first instruction is a touch control operation on a fourth control on a third interface, wherein the fourth control is configured to trigger displaying of the first control and/or the second control, or
the first instruction is a swiping operation on a third interface, wherein the first instruction is used to trigger switching from the third interface to the first interface.

6. The method according to any one of claims 1 to 5, wherein before in response to the first instruction, displaying the first control on the first interface, the method further comprises:
displaying a third interface for importing media, wherein the media includes audio and/or video;
in response to a touch control operation on a fifth control on the third interface, popping up a second window, wherein the second window comprises a sixth control and/or a seventh control and/or an eighth control, and the sixth control is configured to trigger importing audio directly, the seventh control is configured to trigger importing of audio, and vocal separating and/or accompaniment separating on the imported audio, and the eighth control is configured to trigger importing of audio, and timbre optimization on the imported audio; and
in response to a touch control operation on the sixth control or the seventh control or the eighth control on the second window, displaying the audio to be processed on the first interface.

7. The method according to any one of claims 2 to 6, further comprising:
in response to a touch control operation on the second control on the first interface, displaying a third window on the first interface, wherein the third window comprises a ninth control and a tenth control, wherein the ninth control is configured to trigger custom audio effect processing on audio, and the tenth control is configured to trigger preset audio effect processing on audio.

8. The method according to claim 7, further comprising: in response to a touch control operation on the ninth control or the tenth control on the third window, displaying a fourth interface, wherein the fourth interface comprises an eleventh control, and the eleventh control is configured to trigger switching between the preset audio effect processing and the custom audio effect processing.

9. The method according to any one of claims 1 to 8, further comprising: displaying the target audio on a fifth interface, wherein the fifth interface comprises a twelfth control, and the twelfth control is configured to trigger playing of the target audio.

10. The method according to claim 9, wherein the fifth interface further comprises a thirteenth control, and the method further comprises:
in response to a touch control operation on the thirteenth control on the fifth interface, displaying a fourth window, wherein the fourth window comprises a cover import control, one or more preset static cover controls, and one or more preset animation effect controls; and
in response to a control selecting operation on the fourth window, acquiring a target cover;
wherein the target cover is a static cover or a dynamic cover.

11. The method according to claim 10, wherein if the target cover is a dynamic cover, the in response to the control selecting operation on the fourth window, acquiring the target cover comprises:
in response to a control selecting operation on the fourth window, acquiring a static cover and an animation effect;
generating, according to an audio feature of the target audio, the static cover and the animation effect, a dynamic cover which changes with the audio feature of the target audio;
wherein the audio feature comprises audio tempo and/or volume.

12. The method according to any one of claims 1 to 11, wherein the method further comprises:
in response to an exporting instruction for a fifth interface, exporting data associated with the target audio to a target location, wherein the target location comprises an album or a file system.

13. The method according to any one of claims 1 to 11, wherein the method further comprises:
in response to a sharing instruction for the fifth interface, sharing data associated with the target audio to a target application.

14. The method according to claim 12 or 13, wherein the data associated with the target audio comprises at least one of the following:
the target audio, vocals, an accompaniment, a static cover of the target audio, and a dynamic cover of the target audio.

15. An audio processing apparatus, comprising:
a displaying module, configured to, in response to a first instruction, display a first control on a first interface, wherein the first control is associated with audio editing;
wherein the displaying module is further configured to, in response to an operation on the first control on the first interface, display one or more third controls, wherein the one or more third controls are configured to trigger corresponding audio editing on audio; and
a processing module, configured to, in response to an operation on a third control of the one or more third controls, trigger audio editing corresponding to the third control on audio to be processed, to acquire target audio.

16. An electronic device, comprising: at least one processor and a memory;
wherein the memory stores computer-executable instructions; and
the at least one processor executes the computer-executable instructions stored in the memory, to cause the at least one processor to execute the audio processing method according to any one of claims 1 to 14.

17. A computer-readable storage medium, wherein the computer-readable storage medium has computer-executable instructions stored thereon, and when a processor executes the computer-executable instructions, the audio processing method according to any one of claims 1 to 14 is implemented.

18. A computer program product, comprising a computer program, wherein when the computer program is executed by a processor, the method according to any one of claims 1 to 14 is implemented.

19. A computer program, wherein when the computer program is executed by a processor, the method according to any one of claims 1 to 14 is implemented.
